# EUROPEAN PATENT APPLICATION

(11) **EP 2 175 636 A1**
(43) Date of publication of application: **14.04.2010**
(21) Application number: 09172233.0
(22) Date of filing: 05.10.2009
(51) Int. Cl.: H04N 5/262, H04N 5/272, G06T 17/40

(54) **Method and system for integrating virtual entities within live video**

(30) Priority: 10.10.2008 US 249339
(71) Applicant: Honeywell International Inc., Morristown NJ 07962 (US)
(72) Inventor: Wright, Kelly J., Morristown, NJ 07962-2245 (US); Buster, Duke, Morristown, NJ 07962-2245 (US)
(74) Representative: Buckley, Guy Julian

(57) **Abstract**

The present application provides a method and system for inserting virtual entities into live video with proper depth and obscuration. The virtual entities are drawn using a model of the real terrain, animated virtual entities, and a location of the live camera and field of view. The virtual entities are then merged with the live video feed. The merging can occur in real-time so that virtual entity is inserted into the live video feed in real-time.

## Description

### FIELD

The present application relates generally to video graphics processing, and more particularly, to merging simulated entities, such as people and vehicles for example, within live-video feeds.

### BACKGROUND

When training in a network centric environment, users may desire a combination of real and virtual platforms. Within existing training centers, it is difficult to illustrate virtual people or platforms involved in a training exercise in combination with a live video feed of a camera.

Existing systems typically film live action in front of a "blue" or "green" screen, and then insert a computer-generated image or virtual entity behind the live action, or in any area within the live video feed where there is the blue or green color. In this example, a person can appear to be standing on the beach, but actually, the person is in a film studio in front of a large blue or green background. Different backgrounds can be added on those parts in the image where the color is blue. However, if the person himself wears blue clothes, for example, his clothes will become replaced with the background video as well. Blue or Green colors are often used because the blue and green colors are considered least like skin tone.

Such techniques work well in instances in which it is not desirable to insert simulated action into the live video feed with a desired depth and obscuration. Existing techniques may not accurately place simulated objects that are part of the both foreground and the background. For example, existing techniques may not allow a virtual entity to change from being fully obscured by a real live object, to partially obscured by the object, to no obscuration by the object.

### SUMMARY

A system and method for video graphics processing is described. The present system describes a manner of integrating virtual entities and live video streams (or camera snapshots). For example, this method may be used to enable training with live assets to include virtual assets in the scenario. Virtual entities can be made to disappear (or partially disappear) behind terrain objects, such as walls, doors, tables, etc, in the same manner as a view of a live person would be obscured by such objects as well.

In one aspect, the present application includes a method of integrating virtual entities within live video. The method includes receiving a live video feed from a camera of a terrain, receiving any updates from computer generated forces (CGF) entities, and rendering a three-dimensional model of the terrain and the CGF entities in a synchronized manner with the live video feed from the camera. The method further includes merging the rendered terrain including the virtual entity with the live video feed so that the virtual entity is seen in the live video feed, and outputting the merged data to a display.

In another aspect, the present application includes a system for integrating virtual entities within live video. The system includes a live camera video feed of a terrain and a computer operable to execute instructions for rendering a three-dimensional model of the terrain with a virtual entity within the simulated world. The system further includes an overlay controller coupled to the live camera video feed and the computer. The overlay controller merges the three-dimensional model with the live camera video feed so that the virtual entity is seen in the live camera video feed. The overlay controller also synchronizes a view between the rendered virtual world view and the live camera video feed.

In still another aspect, the present application includes a method of integrating virtual entities with the view of a person. The method includes accessing a simulated model of a terrain in the field of view of the person from a database, and inserting a virtual entity into the simulated model of the terrain. The virtual entity is positioned within the simlated model of the terrain accurately with respect to background and static objects in the simulated model of the terrain. The method also includes rendering the simulated model of the terrain including the virtual entity in a synchronized manner with the field of view of the person. The simulated model of the terrain is rendered in a monochrome color and the vitrual image is rendered in multi-color. The method further includes displaying the simulated model of the terrain including the virtual entity in front of the person, and the simulated model of the terrain is displayed with the monochrome color set to be transparent.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

### BRIEF DESCRIPTION OF THE DRAWINGS

Figure 1 is a block diagram illustrating an example system for video graphics processing.
Figure 2 is a block diagram illustrating another example system for video graphics processing.
Figure 3 is a flowchart including example functional steps for performing video graphics processing.
Figures 4A-4D are conceptual illustrations depicting examples outputs of steps shown in the method of Figure 3.
Figure 5 is a block diagram illustrating another example system for video graphics processing.
Figure 6 is a block diagram illustrating an example system in which the live camera has been replaced by a person.

### DETAILED DESCRIPTION

The present application provides a method and system for video graphics processing. In an exemplary embodiment, a computer rendered mimic of a live video feed with additional virtual entities is generated, so that the virtual entities can be integrated accurately within the live video feed. The computer rendered mimic of the live video feed is created using known attributes of the video feed (such as the location, orientation, and field of view of the camera). Additionally, the computer rendered mimic of the live video feed uses a three-dimensional terrain model in which location, orientation, and shape of static objects present in the real world are accurately positioned. This allows virtual entities to appropriately interact with static objects in the virtual world so that once merged with the live video feed, the virtual entities will appear to appropriately interact with static objects in the real world. Interacting of the virtual entities with the virtual world may be performed using known techniques that are commercially available and used in computer games, video games, as well as the simulation industry.

The three-dimensional terrain model of the terrain within the view, or possible view, of live camera is first created to map out objects in the image. Objects are positioned in the three-dimensional database relative to each other. A final or exact location of the camera is not necessary at this point, as long as the three-dimensional terrain models contain an accurate model of the terrain within the view of camera. Only objects between the camera position and the virtual entity's position will need to be accurately represented in this three-dimensional terrain model. Less dynamic behavior of the virtual entities may allow for high fidelity sections of the three-dimensional terrain model to be more clearly focused. For cameras with dynamic location or orientation, more terrain can be accurately represented in the three-dimensional terrain model. All physical static objects present in the real world will be represented in a mono-chrome default color within the three-dimensional terrain model. Virtual entities or objects that are not present in the real world will be represented in full-color. The mono-chrome default color should not be present in these virtual entities. During runtime, the three-dimensional terrain and virtual entities are rendered from the point of view of the live camera. This will result in a simulated video feed in which virtual entities are properly placed, sized, and obscured while the rest of the simulated video feed is the default mono-chrome color. From this point, the simulated video is merged with the live video feed so that the parts of the simulated video feed that are not the mono-chrome default color are overlaid on top of the live video feed. Thus, for example, a virtual entity representing and resembling a person may be inserted with portions in front of a tree, but behind a portion of a plant that is present in the video feed.

In exemplary embodiments, the virtual entities rendered with the three-dimensional terrain model can be merged with the live video feed, so that the virtual entities are seen in the live video feed and are accurately represented with respect to objects in the live video feed. The merging can occur in real-time, so that virtual entities are overlaid on top of live video feed in real-time.

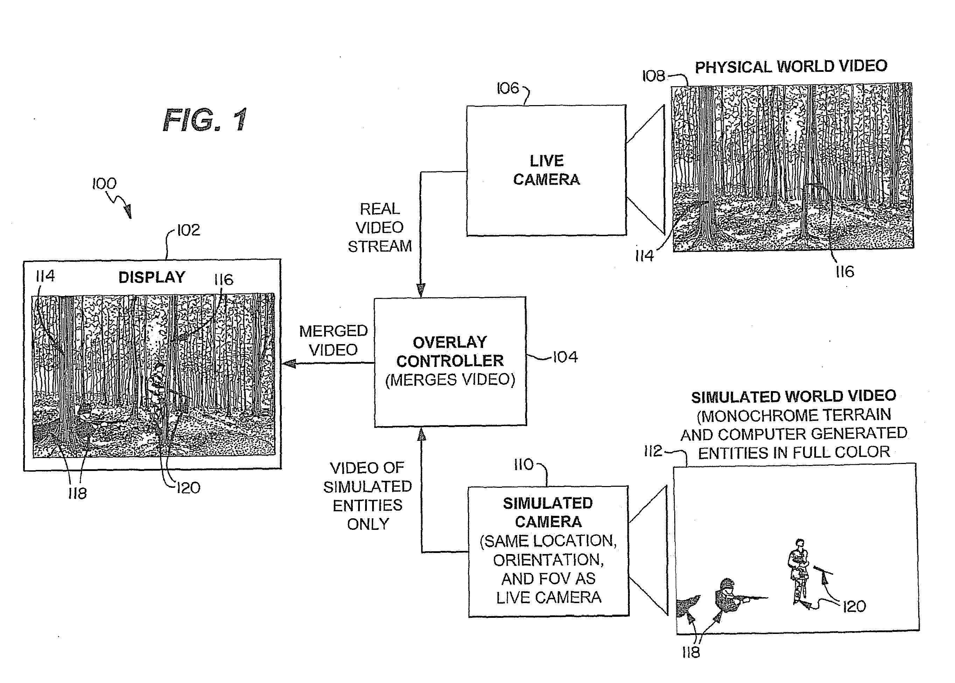

Turning to the figures, Figure 1 is a block diagram illustrating a system 100 for video graphics processing. The system 100 includes an example of a static camera, highlighting components to implement the video graphics processing method. The system 100 includes a live camera 106 that outputs live video of the physical world 108 to an overlay controller 104. The physical world video 108 contains objects 114 and 116, for example, which will obscure inserted virtual entities. A simulated camera 110 connects to the overlay controller 104 and mimics a location, orientation, and field of view of the live camera 106. The simulated camera 110 renders a simulated world video 112 that matches the physical world video 108. The simulated world video 112 is rendered with a monochrome terrain and full color virtual entities 118 and 120. It can be seen that the full color virtual entities 118 and 120 are partially obscured by objects in the mono-chrome terrain. The simulated camera 110 sends the simulated world video 112 to the overlay controller 104. The overlay controller 104 merges the physical world video 108 with the simulated world video 112 by setting the monochrome color of the simulated world video 112 to be transparent and overlaying the simulated world video 112 on top of the physical world video 108. A resulting display is shown in a displayed video 102. The displayed video 102 shows the physical world objects 114 and 116 obscuring the virtual entities 118 and 120.

It should be understood that the system 100 and other arrangements described herein are for purposes of example only. As such, those skilled in the art will appreciate that other arrangements and other elements (e.g. machines, interfaces, functions, orders, and groupings of functions, etc.) can be used instead, and some elements may be omitted altogether according to the desired results. Additionally other methods of overlaying video may be used. Further, many of the elements that are described are functional entities that may be implemented as discrete or distributed components or in conjunction with other components, in any suitable combination and location.

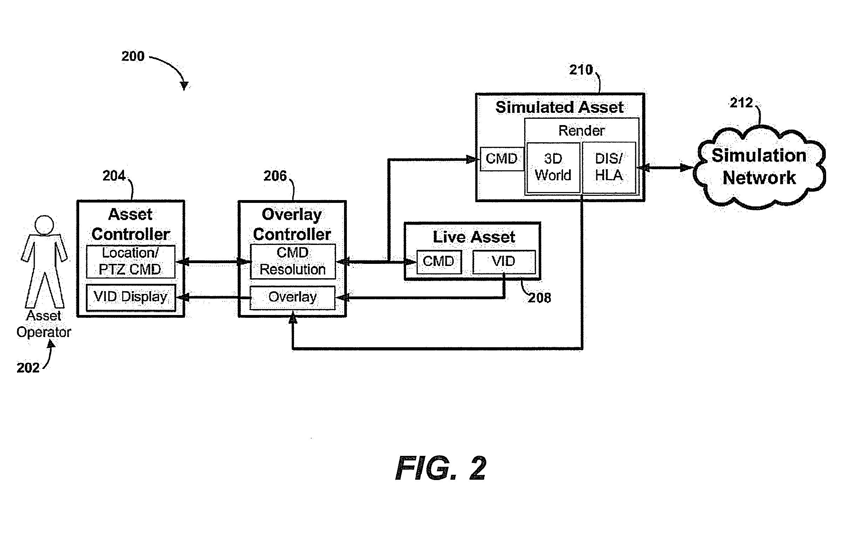

Figure 2 is a block diagram illustrating another example system 200 for video graphics processing. The system 200 may be controlled by an operator 202. The operator 202 may watch the video and provide control to an asset 208 in the field. The asset 208 could include a camera, or other device. The system 200 also includes a simulated asset 210, which may be in the form of simulation software running on a computer. The simulated asset 210 can mimic a view seen by the camera 208, or in some cases operation of the camera as well. The methods for implementing the simulated asset 210 will vary depending upon application. The live camera on the asset 208 can be static or can include pan-tilt-zoom functionality. Further, the asset 208 could be a camera attached to or integrated with a robot or unmanned aircraft so that the camera can change locations, or the asset 208 could be a standalone camera. Extra sensors may be attached to or integrated with the asset 208 to measure a precise location and orientation of the asset 208 and its camera. The simulated asset 210 is intended to mirror the asset 208 in the virtual world. For example, if the asset 208 is a camera, the simulated asset 210 will provide a simulated view of the field of view of the camera.

The operator 202 may operate an asset controller 204 to control the asset 208 and the simulated asset 210. The asset controller 204 may be a computer that includes software that may be executed to control the asset 208, and to view merged video from the asset 208 and the simulated asset 210. The asset controller 204 may be a standard laptop or desktop computer, for example. The asset controller 204 may include software to convert input received from the asset operator 202 into commands that are understood by the asset 208.

The asset controller 204 includes a location/PTZ CMD (pan/tilt/zoom command) application that can be executed by a processor to send commands to the asset 208 and the simulated asset 210 via an overlay controller 206. The format of the commands will depend on the type of asset. The commands may be interpreted to modify and control a location of the asset 208 (in the event that the asset 208 can change locations) and/or modify and control a configuration of the asset 208, such as controlling a pan-tilt-zoom function of a camera. The asset controller 204 may send commands in the format as if the asset controller 204 were directly coupled to the asset 208. The asset controller 204 may receive a response from the asset 208 via the overlay controller 206 indicating receipt of the commands and actual location and orientation of the asset 208. The asset controller 204 will receive a merged video stream from the overlay controller 206 and display the video. The merged video stream comprises the asset 208 video overlaid with the simulated asset 210 video after setting a mono-chrome color of the simulated asset 210 video to transparent, as discussed above.

The overlay controller 206 may take the form of a computer that is coupled to the asset controller 204 (either through a wired or wireless connection), to the asset 208 (either through a wired or wireless connection), and to the simulated asset 210 (either through a wired or wireless connection). The overlay controller 206 operates to merge simulated and live video streams, and to pass location and pan-tilt-zoom command information from the asset controller 204 on to both the asset 208 and the simulated asset 210.

The overlay controller 206 will forward commands from the asset controller 204 to both the asset 208 and the simulated asset 210 using a command resolution application. The overlay controller 206 also resolves any differences between functions and views shown by the asset 208 and the simulated asset 210. The simulated asset 210 operates to mimic the asset 208. For example, if the asset 208 is a camera, then the simulated asset 210 will render the same view point of the asset 208. The simulated asset 210 may receive commands in the same format as the live asset 208, so that if the camera is instructed to turn 45° to the left, then a display shown by the simulated asset 210 should change in a substantially corresponding fashion as the field of view of the camera changes. The commands may be the same as received by the live asset 208 or the overlay controller 206 may make modifications to the commands to synchronize the simulated asset 210 with the live asset 208.

The simulated asset 210 may take the form of a computer executing applications, and will render a simulated world using a rendering application. The rendering application will utilize a three-dimensional model of the terrain in which everything is set to a single mono-chrome color, such as green or blue. A location and orientation at which the simulation of the terrain is rendered will be determined by interpreting commands received from the asset controller 204 via the overlay controller 206.

As mentioned, the simulated asset 210 uses a three-dimensional terrain database as well as three-dimensional models of any entities to render the simulated camera view. A background of the simulated view will be set to a single monochrome color, such as blue or green. Virtual entities in the simulated view will be inserted and rendered in multi-color as normal. Virtual entities will be positioned accurately within the simulated view as the entity would be positioned in real life, such as in front of or behind an object. Virtual entities that are further away will be rendered as smaller than those close up. Virtual entities will not simply be overlaid onto the simulated video, but rather, will be positioned within the simulated video in front of and behind objects, for example.

The overlay controller 206 merges video streams from the asset 208 and the simulated asset 210. The simulated asset 210 will send a video stream with a mono-chrome background (such as blue or green) to the overlay controller 206, which will remove the entire mono-chrome background color, and then place the video stream on top of the remaining data in the asset 208 video stream. The merged video stream can then be sent to the asset controller 204 for viewing by the operator 202.

The overlay controller 206 will ensure that the simulated asset 210 is substantially in synchronization with the asset 208 so that the simulated asset 210 mimics the asset 208. For example, if a location or orientation of the simulated asset 210 differs from the asset 208, the overlay controller 206 may contain software that can modify commands being sent to the simulated asset 210 in order to realign the simulated asset 210 with the asset 208. The overlay controller may receive commands from additional sensors attached to the asset 208 in order to accurately synchronize the asset 208 and the simulated asset 210.

The rendering application of the simulated asset 210 can be connected to a simulation network 212 via a distributed interactive simulation (DIS) or high level architecture (HLA) protocol, or other protocols. In rendering the simulated world, the simulated asset 210 may receive information and instructions from the simulation network 212, such as the location, orientation, and behavior of a virtual entity.

The simulation network 212 includes any number of computers that may be located on a local area network (LAN) or wide area network (WAN). The simulation network 212 can include high to low fidelity simulations that are either autonomous or human-in-the-loop, for example.

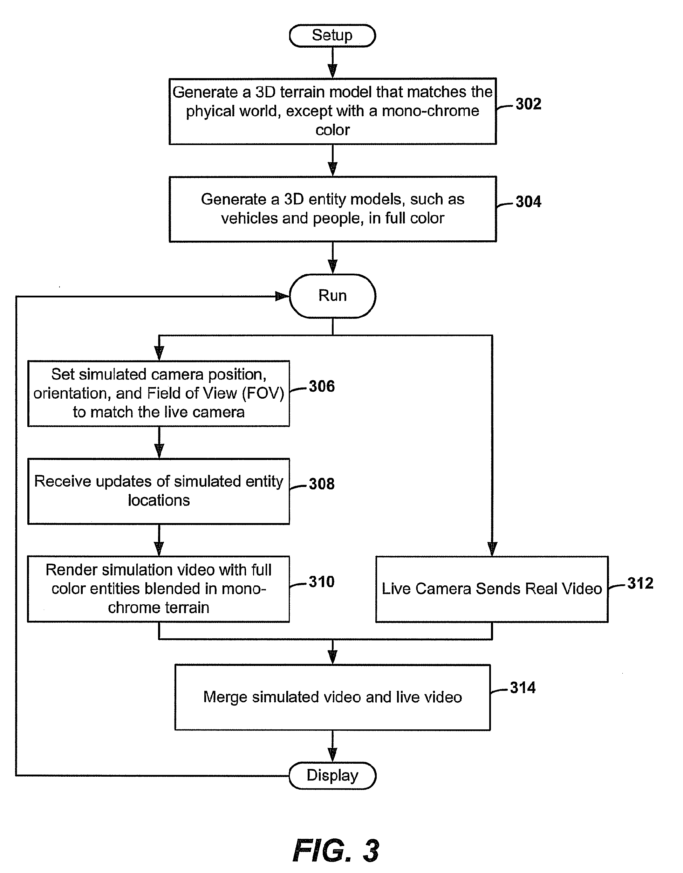

Figure 3 is a flowchart including example functional steps for performing video graphics processing. It should be understood that the flowchart shows the functionality and operation of one possible implementation of present embodiments. In this regard, each block may represent a module, a segment, or a portion of program code, which includes one or more executable instructions for implementing specific logical functions or steps in the process. Alternative implementations are included within the scope of the example embodiments of the present application in which functions may be executed out of order from that shown or discussed, including substantially concurrent or in reverse order, depending on the functionality involved, as would be understood by those reasonably skilled in the art of the present invention. In addition, one or more elements of the system 100 may perform one or more of the functional steps represented by blocks in the diagram of Figure 3.

Steps of the method of Figure 3 will be discussed in relation to components of the system 100 of Figure 1 and the system 200 of Figure 2.

During setup, three-dimensional models of terrain will be created, as shown in blocks 302 and 304; these steps are often referred to as content creation. During content creation, as shown in block 302, a three-dimensional terrain model is created to match the physical world; however, the three-dimensional terrain model will be of a single monochrome color. To do so, measurements are taken to determine locations of objects in the terrain, or a detailed survey of the terrain may be performed to identify locations of objects. Pre-existing drawings of buildings may be used to obtain measurements. Commercial off the Shelf (COTS) tools can be used for creating a three-dimensional model of the terrain. Examples of a COTS tools would be Creator available from Presagis of Richardson, Texas; XSI available from Softimage® of Montreal, Canada; and three-dimensional Studio MAX available from Autodesk® of San Rafael, California.

The extent and fidelity of the terrain created will depend upon an application. A highest fidelity of the terrain may be required where virtual entities and objects interact within the view of the camera. Objects that will partially obscure virtual entities will typically require precise measurements. The monochrome three-dimensional terrain will be used for rendering the simulated world by the simulated asset 210. A full color version of the terrain may be used by other applications that are part of the simulation network 212. The simulation network 212 may impose other requirements on the extent and fidelity of the terrain.

During the content creation phase, three-dimensional models of all virtual entities in full color and their actions are obtained or created, as shown in block 304. For example, these might include human models such as 118 and 120, or vehicle models. The models may be static or have joints and moving parts. Actions will be created during the content creation phase as well, for example, should the human models be able to walk or kneel.

The computer model simulation and the live-video feed are then linked together or synchronized, as shown at block 306, so that the computer model simulation mimics the live-video feed. For example, if the camera were to receive a command indicating to turn 45° to the left, the live-video feed will correspondingly change, and because the simulated view is linked with the live-video feed, the simulated view will also receive the command indicating to turn 45° to the left and will correspondingly change to mimic the live-video feed.

Next, as shown at block 308, updates will be received for the location of simulated entities. The updates may be internally generated by the simulated camera 110 or generated by computer generated forces and other simulations on the network 212. These updates will include position, orientation, and any behavior information required to render to the entity in the virtual world. The network 212 may also send information on detonations and explosions or other actions for rendering, for example.

As shown in block 310, the simulated world video 112 will be rendered by the simulated camera 110 or simulated asset 210 with full color virtual entities blended into a mono-chrome terrain. At about the same time as the simulated video is being rendered, the live camera 106 or asset 208 would send real video to the overlay controller 104, as shown in block 312. The real video includes the physical world video 108.

As shown in block 314, the video from block 310 is merged with the video from block 312. This is performed by setting the mono-chrome background of the simulated video 112 from block 310 to transparent and then overlaying the simulated video 112 on top of the physical world video 108 from block 312. Other methods of merging video may be employed as well. At this stage, the merged video can be displayed and the steps 306, 308, 310, 312, and 314 can be repeated for a next video frame. In this respect, the merging may occur on a frame-by-frame basis, and in real-time, so as to enable a realistic simulation of a virtual entity present within the live video feed.

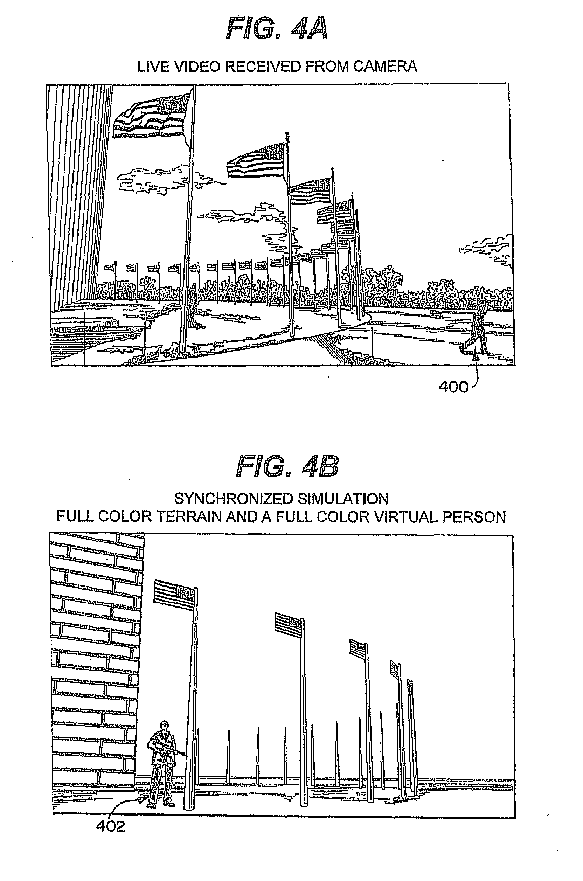

Figures 4A-4D are conceptual illustrations depicting example outputs of steps of the method of Figure 3. Figure 4A illustrates an example view of a live video feed output from a camera. The live video feed depicts static objects, such as a building and flagpoles, and dynamic objects, such as a person 400 walking across the terrain.

Figure 4B illustrates an example view of an output of the simulated asset at about the same point in time as the output from the camera illustrated in Figure 4A. The simulated asset receives commands from the overlay controller instructing the simulated asset of the coordinates of the terrain for which the camera is viewing so that the simulated asset engine can access a stored three-dimensional terrain map within a database and retrieve an appropriate simulated portion of the terrain. The instructions also may include a pan-tilt-zoom indication of the camera to inform the simulated asset engine of how to present the simulated view. The simulated view shown in Figure 4B depicts the static objects as seen in Figure 4A, such as the building and the flag poles. All static objects as well as the background of the simulated view may be set to be a single color.

The example illustration in Figure 4B also includes a virtual entity 402 that has been inserted. The virtual entity 402 does not represent any entity that is actually present in the field of view of the live camera, but rather represents a fake entity. The simulated asset may receive instructions to insert virtual entities into the simulated view at a specific location using coordinates within the terrain. For example, in Figure 4B, the virtual entity 402 has been inserted near a flagpole, so that a portion of the virtual entity 402 is placed behind a flagpole in a manner such that the flagpole obscures a portion of the virtual entity 402.

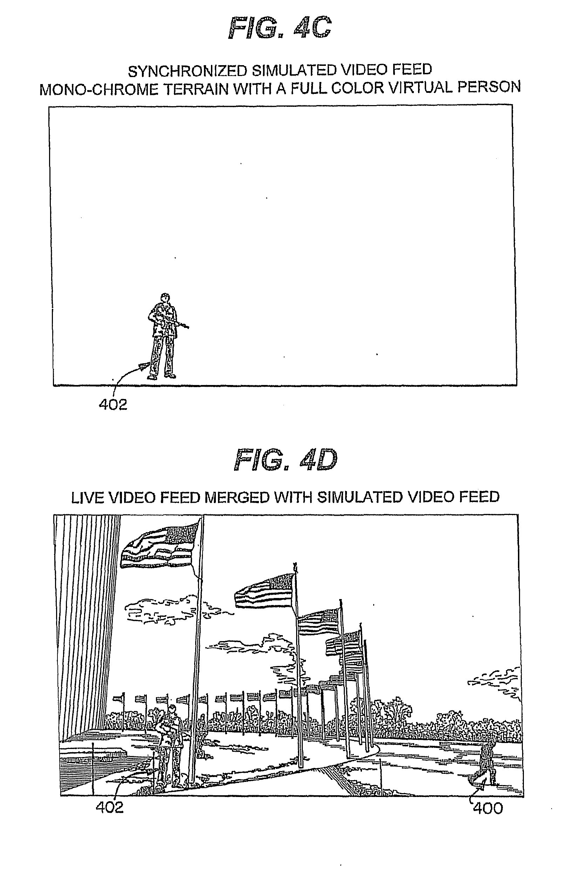

Figure 4C is an example illustration of the simulated view shown in Figure 4B when the simulated terrain is set to a mono-chrome color, such as green. Figure 4C is the actual rendered simulated video that is sent to the overlay controller.

Figure 4D illustrates an example view of an output as seen at the asset controller of the live video feed (as shown in Figure 4A) merged with the simulated video feed (as shown in Figure 4B). The merging process includes overlaying the live video feed onto the simulated video feed so that all background and static objects (e.g., everything set in a mono-chrome color) within the simulated video feed are set to back for viewing purposes, and the entire live video feed is brought to the forefront. In addition, any inserted virtual entities are set to be shown over the live video feed. For example, Figure 4C illustrates the virtual entity 402 on top of the live video feed and at the same position as within the simulated video feed, so that a portion of the virtual entity 402 is obscured by a flagpole.

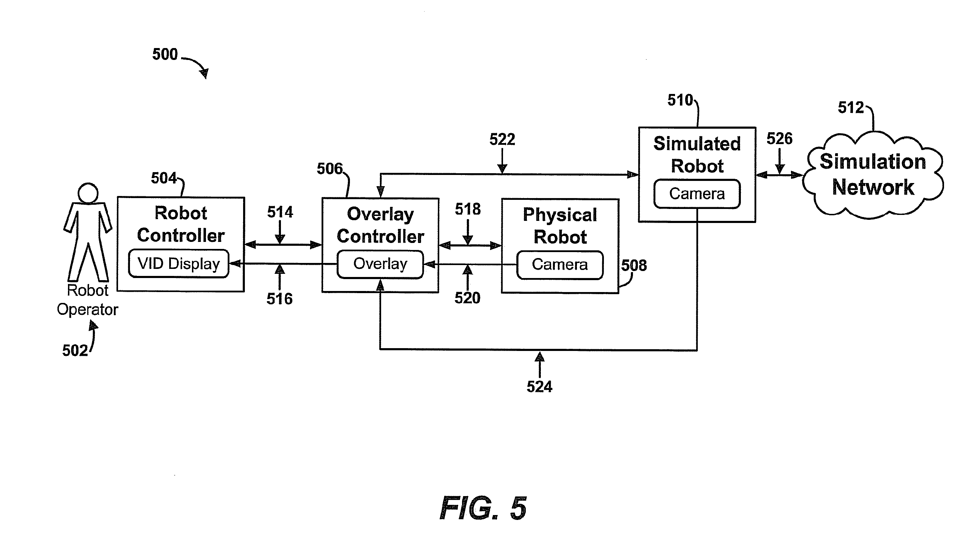

Figure 5 is another example implementation of a system 500 for video graphics processing, which is similar to the system shown in Figure 2. The system 500 differs in that a camera may be placed on a robot 508, so that the camera may change locations during a simulation. A robot operator 502 may use a robot controller 504, which is a specialized piece of hardware and software for controlling the robot 508. The robot controller 504 communicates with the overlay controller 506, which forwards commands to the robot 508 by using an IP address of the robot 508. The robot controller 504 interprets user input from the robot operator 502 and converts the input into commands that can be understood by the robot 508. The commands are sent to the overlay controller 508 via an interface 514, which may be a wired or wireless interface. The overlay controller 506 processes the commands from the robot controller 504 and will forward the commands to the robot 508 via an interface 518. The overlay controller 506 receives updates from the robot 508 over the interface 518 as well that may specify a current location and orientation of the robot 508 and an orientation and field of view (FOV) of the camera attached to the robot.

A simulated robot 510 includes a simulation that receives commands in the same format as the robot 508. Differences of location and orientation between the robot 508 and the simulated robot 510 will occur over time due to real world physics, such as friction of the surface that the robot 508 is crossing and that the simulated robot 510 not aware. The simulated robot 510 will send a location, orientation, camera orientation, and FOV to the overlay controller 506 via the interface 522. The overlay controller 506 will compare responses from the robot 508 and the simulated robot 510 and send any adjustments needed to the simulated robot 510 via the interface 522. The adjustment command is an extra command that is received by the simulated robot 510 and is not available in the robot 508, such as a command of generating unrealistic behavior, like an instantaneous jump, out of the simulated robot 510 in order to mimic the robot 508. In addition to adjustment commands, the overlay controller 506 will also send the commands received from the robot controller 504 across the interface 514 to the simulated robot 510 across the interface 522. The commands are the same as the commands sent to the robot 508 across the interface 518.

The simulated robot 510 receives updates from computer generated forces that are part of the simulation network 512 in a Distributed Interactive Simulation (DIS) format across an interface 526. Likewise, the simulated robot 510 reports a position and orientation, which is also the position and orientation of the robot 508, in a DIS format to the simulation network 512 across the interface 526. After updates from CGF entities are received by the simulated robot 510, then the simulated robot 510 renders a simulated camera view. The camera view is rendered using a three-dimensional model of the terrain in a mono-chrome green color. The simulated robot 510 may render the video using the Virtual Environment Software Sandbox (VESS) available for Windows® products, for example. Other technologies or products may be used to render the video, such as MÄK Stealth available from VT MÄK of Cambridge, Massachusetts. Video from the simulated robot 510 will be sent out via the interface 524.

As the simulated robot 510 sends video to the overlay controller 506 over the interface 524, the robot 508 sends a camera feed to the overlay controller 506 over the interface 520. The overlay controller 506 merges the two video streams by setting the mono-chrome green color of the simulated robot video to transparent and laying the simulated video on top of the robot video stream. The overlay controller 506 then sends the merged video to the robot controller 504 across the interface 516 for viewing by the robot operator 502.

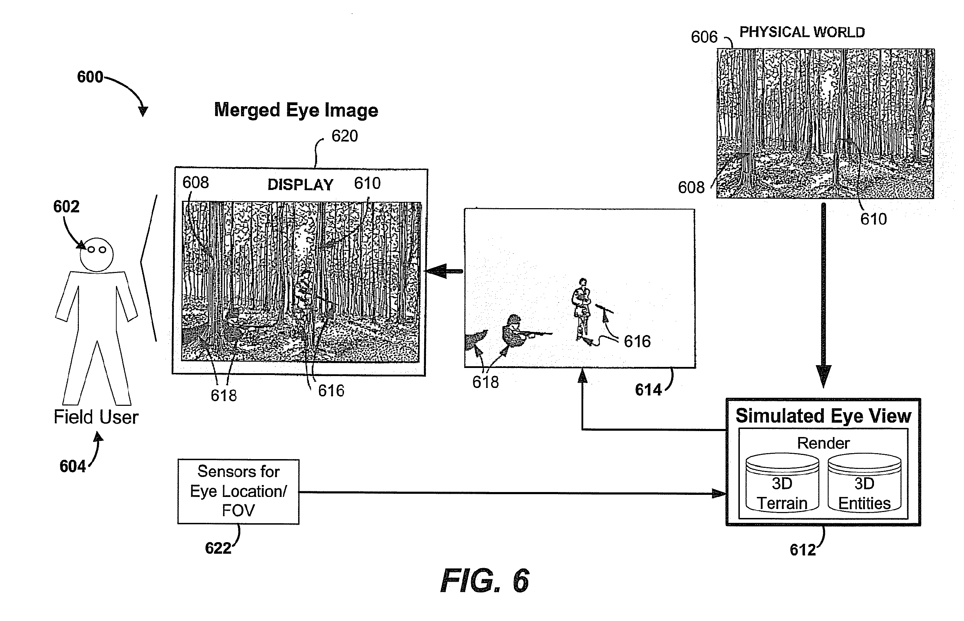

The present application has been described as inserting virtual entities into a simulated model of a terrain and merging the simulated model with a live camera feed so as to output the merged data onto a display or recording. However, in another respect, the simulated model can be conceptually merged with a live view. Figure 6 illustrates such an embodiment.

Figure 6 is a block diagram illustrating an example system 600 in which the live camera has been replaced by the human eye 602. In this example, a person 604 may be in the field and sees the physical world 606 with trees 608 and 610, for example. A simulated eye view engine 612 renders a simulated view 614 of the physical world 606 in a monochrome color with virtual entities 616 and 618 in full color. The simulated view 614 is displayed on a transparent display that is positioned between the human eye 602 and the physical world 606. Thus, an image seen by the human eye 602 is a merged image 620.

As a specific example, the user 604 may wear glasses or a head-mounted apparatus that displays the simulated view 614, and by looking through the glasses, the physical world 606 will fill a remainder of a viewing space of the user 604. In this manner, the virtual entities 616 and 618 are inserted into the view of the user 604.

The simulated eye 612 may also have access to sensors 622 that determine a location and field of view of the human eye 602. For example, sensors may be mounted to a head gear apparatus of the user and sense a location of the user's eye 602, and a direction of view of the user's eye 602. The sensors 622 can forward this information to the simulated eye view engine for rendering the simulated eye view 614 appropriately. The simulated eye view 614 is rendered by accessing databases of the three-dimensional terrain model and three-dimensional entity models, such that a mono-chrome terrain is rendered so as to properly obscure the entities. The simulated eye view 614 is then displayed with the mono-chrome color displayed transparently. Because the human eye 602 sees the simulated view 614 in front of the physical world 606, with the background of the simulated view transparent and the virtual entities in full-color, the user 604 will see the merged image 620.

As mentioned, the system 600 may be used with Head Mounted Display (HMD) technology. The HMD can be worn by the field user 604, and could perform the functions for both the transparent display 614 and the sensors 622.

In the present application, the video graphics processing has been described as overlaying the simulated video feed onto the live video feed to perform the merging process. Either method may be used, or the processing may include additional or alternative steps when using one or the other method. In each method, the background of the simulated video will be made transparent prior to the overlay, and after the overlay, any virtual entities inserted into the simulated video will be seen within the live video feed.

It should be understood that the arrangements described herein are for purposes of example only. As such, those skilled in the art will appreciate that other arrangements and other logic or circuit elements can be used instead, and some elements may be omitted altogether according to the desired results. Further, many of the elements that are described are functional entities that may be implemented as discrete or distributed components or in conjunction with other components, in any suitable combination and location.

It is intended that the foregoing detailed description be regarded as illustrative rather than limiting, and it is intended to be understood that the following claims including all equivalents define the scope of the invention.

## Claims

1. A method of integrating virtual entities within live video, comprising:
receiving a live video feed of a terrain from a camera;
accessing a simulated model of the terrain from a database;
inserting a virtual entity into the simulated model of the terrain;
rendering the simulated model of the terrain in a synchronized manner with the live video feed from the camera;
merging the rendered image of the terrain including the virtual entity with the live video feed so that the virtual entity is seen in the live video feed; and
outputting the merged data to a display.

2. The method of claim 1, wherein accessing a simulated model of a terrain from a database comprises:
measuring geographical positions of terrain surfaces; and
assembling the database of simulated surfaces to match the terrain.

3. The method of claim 1, wherein rendering the simulated model of the terrain in a synchronized manner with the live video feed from the camera comprises:
determining a location of the camera; and
determining a camera field of view.

4. The method of claim 1, wherein rendering the simulated model of the terrain in a synchronized manner with the live video feed from the camera comprises:
rendering the virtual entity and the simulated model of the terrain using the location of the camera and the camera field of view; and
rendering the virtual entity where a portion may be obscured by the simulated model of the terrain.

5. The method of claim 1, wherein merging the rendered image of the terrain including the virtual entity with the live video feed so that the virtual entity is seen in the live video feed comprises:
outputting the live video feed for areas of an output image where rendered pixels are a single monochrome color; and
outputting the virtual entity for areas of the output image where rendered pixels are not the single monochrome color.

6. The method of claim 5, wherein merging the rendered image of the terrain including the virtual entity with the live video feed so that the virtual entity is seen in the live video feed comprises:
setting all background and static objects in the simulated model excluding the inserted virtual entity to be a single color; and
overlaying portions of the rendered image that are not the single color onto the live video feed, so that the virtual entity is seen in the live video feed.

7. The method of claim 5, wherein merging the rendered image of the terrain including the virtual entity with the live video feed so that the virtual entity is seen in the live video feed comprises:
setting all background and static objects in the simulated model excluding the inserted virtual entity to be transparent with respect to the live video feed; and
overlaying the rendered image onto the live video feed so that a portion of the live video feed overlaps a portion of the virtual entity.

8. The method of claim 1, wherein inserting a virtual entity into the simulated model of the terrain comprises positioning the virtual entity into the simulated model of the terrain accurately with respect to background and static objects in the simulated model of the terrain.

9. The method of claim 1, wherein rendering the simulated model of the terrain in a synchronized manner with the live video feed from the camera comprises rendering the simulated model of the terrain in a monochrome color and the vitrual entity in multi-color.

10. The method of claim 1, wherein outputting the merged data to the display comprises outputting the merged data to a head mounted display.
